# EUROPEAN PATENT APPLICATION

(11) **EP 4 351 164 A1**
(43) Date of publication of application: **10.04.2024**
(21) Application number: 22382949.0
(22) Date of filing: 07.10.2022
(51) Int. Cl.: H04R 1/10, H04R 5/04

(54) **HEADSET WITH SECURE COMMUNICATION**

(71) Applicant: Giesecke+Devrient Mobile Security Germany GmbH, 81677 München (DE)
(72) Inventor: Gomez, Xavier, E-08820 El Prat de Llobregat (Barcelona) (ES)
(74) Representative: Giesecke+Devrient IP

(57) **Abstract**

The present invention is directed towards a method for securely operating a headset. The suggested method provides the advantage that the operation mode of a headset can be adapted under consideration of specific sensor information. The present invention is likewise directed towards a headset as such along with a system for securely operating the headset. Moreover, a computer program product is suggested providing instructions for carrying out the suggested method or operating the suggested system.

## Description

The present invention is directed towards a method for securely operating a headset. The suggested method provides the advantage that the operation mode of a headset can be adapted under consideration of specific sensor information. The present invention is likewise directed towards a headset as such along with a system for securely operating the headset. Moreover, a computer program product is suggested providing instructions for carrying out the suggested method or operating the suggested system.

It is commonly known to provide a wireless connection among end devices such as Bluetooth. The prior art discusses security risks and aims at securing the underlying communication channel between a portable end device and a computer. Moreover, several attacks are discussed in the prior art resulting in access to confidential information.

It is commonly known to provide noise canceling techniques, which rely on a microphone which is arranged at the headset. Consequently, a sensor is attached to the headset and outer noise is recorded and the respective information is used for adapting the provided noise to the user. To summarize this technique, the frequencies of the surrounding noise are recorded and inversely modulated on the provided output.

It is likewise commonly known to use a so-called Bluetooth headset for accomplishing phone calls which results in problems once the user drops the headset, which is not recognized by the communication partner. Hence, at least a part of the conversation is lost or has to be repeated. The communication channel can be decrypted even in situations where the user does not use the headset. This results in security risks as the user typically does not switch off the headset once it is no longer used.

Similar problems arise in case the user inserts only one ear piece and consequently, the other ear piece is not used. In case the output signal is provided in stereo, there are deficiencies regarding the provided output in case only one ear piece is placed.

Summarizing the above, commonly known methods for operating a headset involve firstly security risks and secondly are not sufficiently comfortable for the user.

Consequently, it is an object of the present invention to provide an improved method for securely and comfortably operating a headset. It is likewise an object of the present invention to suggest a headset as such along with a system for securely operating a headset. Moreover, it is an object of the present invention to provide a computer program product with control instructions operating the suggested system and headset or performing the suggested method steps.

The object is solved by features according to independent claims. Further advantages are provided by dependent claims.

Accordingly, a method for securely operating a headset is suggested comprising the steps of reading out at least one pressure sensor being arranged at the headset, determining a position of the headset, the position indicating whether the headset is worn or not, and controlling an operation mode of the headset as a function of the determined position of the headset.

The suggested method securely operates a headset as in case the headset is not used the communication can be disabled or the headset is turned off. In this case it is no longer possible to attack the communication and consequently, a secured method is provided. Operating the headset refers to the operation of the headset as such along with the communication with the headset. The headset itself contains control instructions and respective hardware components or a remotely arranged further device operates the headset by transmitting control instructions.

The head phone can be of any design, namely an in-ear headset or an over-ear headset. The pressure sensor can be arranged on both sides of the headset referring to both ear cups or both ear pieces. Typically, an in-ear headset comprises ear pieces and an over-ear headset comprises ear cups. In any case, pressure sensors are applied on both sides of the headset indicating whether the headset is worn or not. The pressure sensor is arranged such that it fits the respective design. Using in-ear headsets, the pressure sensor has to be designed differently compared to over-ear headsets. The pressure sensor is arranged such that each side of the headset, which refers to ear pieces or ear cups, can be analyzed and, accordingly, the underlying method identifies which side of the headset is used.

Regarding in-ear headsets, only one ear piece can be inserted and the other ear piece may not be used. Using over-ear headsets, it may be the case that only one ear cup is used and the other ear cup is not used. The normal mode of operation is that both sides of the headset are used.

In a first method step, reading out at least one pressure sensor being arranged at the headset is performed. Consequently, each pressure sensor is addressed and it can be detected whether pressure is applied towards the sensor, indicating that the respective side of the headset is worn. In case in-ear headsets are present, the pressure sensor is arranged to detect whether the respective part of the headset, namely the ear piece, is inserted into the ear or not. In case an over-ear headset is used, the pressure sensor recognized whether the headset is pressed against the head of the user.

In this way it can be evaluated in which position the headset currently is and, moreover, it can be detected whether the headset is worn or not. This refers to either side of the headset or at least one side of the headset.

The position of the headset may be that one ear piece is inserted or both ear pieces are inserted. Moreover, the position may be that one ear cup is placed over the ear or both ear cups are placed over the ears. For being able to determine such a position, at least one pressure sensor is arranged on each ear piece or each ear cup, respectively. When the ear piece is inserted, it is worn and in case the ear cup is placed it is likewise worn. Consequently, it is possible to determine the position of the headset which refers to both sides of the headset.

Once the position is determined, controlling an operation mode of the headset is performed. This is accomplished as a function of the determined position of the headset. Consequently, the detected position is considered and a predefined operation mode is selected. The operation mode may determine that the headset is switched off, only one side of the headset is used or the output is provided in a specific way. It is preferable that in case the headset is not used, the headset is switched off. This can be accomplished due to security reasons. According to an aspect of the present invention, the position of the headset is determined for each side of the headset separately. This provides the advantage that each side can be controlled with or without considering the control of the other side of the headset.

According to a further aspect of the present invention, the operation mode is switched to mono in case on the one side of the headset is worn. This provides the advantage that the full output is provided to a single ear piece or ear cup. In case the headset is operated in stereo mode some sounds may be delivered only to one of the ear pieces or ear cups and accordingly, in case this specific side of the headset is not used, the sound is lost. By switching into mono mode, each sound is delivered and, accordingly, no signals are lost.

According to a further aspect of the present invention, a communication of the headset is stopped in case it is determined that the headset is not worn. This provides the advantage that both energy can be saved and, moreover, security risks are minimized. The communication refers to the transmittance of data from a sending end device to the headset and communication in the opposite direction. The communication can be stopped by merely disabling interfaces or turning the headset off. It is preferred that the headset is only switched off temporarily such that the suggested method can turn the headset again on. In case it is detected that only one single side of the headset is used, the communication is stopped only in the ear piece or ear cup which is not worn.

According to a further aspect of the present invention, the communication of the headset is started in case it is determined that the headset is worn. This provides the advantage that once the further ear piece or ear cup is put in place, the communication can be restarted or resumed. Consequently, in case one side of the headset is removed, this side will no longer be addressed and once the side is placed or inserted again, the communication and the operation is resumed. In case the complete headset is not worn, the headset as such is switched off and the communication as a whole is terminated.

According to a further aspect of the present invention, controlling the operation mode is performed using encrypted messages. This provides the advantage that not only the voice signal is encrypted but also control instructions are encrypted, making it impossible for an attacker to turn the headset on once it is disabled.

According to a further aspect of the present invention, respectively at least one pressure sensor is arranged on both sides of the headset. This provides the advantage that each side of the headset can be examined and on each side at least one pressure sensor is arranged to determine whether the ear piece is inserted or the ear cup is placed. To increase the reliability of the suggested method, several pressure sensors can be applied. This may be of advantage to detect whether the ear piece is properly inserted or the ear cup is properly placed over the ear.

According to a further aspect of the present invention, an acceleration sensor is read out and controlling the operation mode is performed as a function of the acceleration of the headset. This provides the advantage that once the headset is dropped, the operation can be stopped. This solves the problem that in case the user drops the headset during a phone call, the headset still transmits data over the microphone, which is not intended by the user. According to the present invention, the headset is no longer operated once it is dropped, which refers to both sides of the headset, namely one ear piece. In case an in-ear headset is used, the operation of the ear piece can be terminated, which is dropped.

According to a further aspect of the present invention, in case an acceleration of the headset above a predefined structure is determined, the operation of the headset is stopped. This provides the advantage that it can be evaluated how fast a headset falls and, accordingly, it can be determined whether the headset is only moved by the user or if it is merely dropped. This makes sure that the headset is turned off only in case it is dropped.

According to a further aspect of the present invention, in case the operation of the headset is stopped, an output is recorded and provided later on. This provides the advantage that it might not be possible for a caller to identify that the communication partner has dropped the headset and, accordingly, the caller keeps on talking which is not recognized by the user of the headset. Consequently, the conversation can be recorded and provided to the user of the headset upon request. The user may pick up the headset and play the recorded conversation.

According to a further aspect of the present invention, the operation of the headset is stopped in case at least one pressure sensor does not respond. This provides the advantage that in case of an attack or an instable hardware operation, the security risk is minimized and the headset is turned off. Not responding refers to the situation when a signal is sent to the headset and the headset does not respond within a predefined period of time. In case a timeout occurs, the headset is disabled.

According to a further aspect of the present invention, the headset operates a secure element. This provides the advantage that specific hardware and software techniques can be applied for securing data. As the communication and the operation of the headset might involve encryption and decryption, specific public keys and private keys need to be stored and processed. Consequently, a secure element may perform security relevant tasks and safe specific data.

The object is also solved by a headset for operating the method as explained above.

The object is also solved by a system for securely operating a headset, comprising an interface arranged to read out at least one pressure sensor arranged at the headset, a processing unit arranged to determine a position of the headset, the position indicating whether the headset is worn or not, and an operation unit arranged to control an operation mode of the headset as a function of the determined position of the headset.

The suggested system may likewise comprise the headset as such along with a further communication partner, preferably an end device communication with the headset. The communication partner may be a mobile phone, a computer or an audio system.

The object is also solved by a computer program product comprising instructions being arranged to operate the suggested system and perform the suggested method steps.

According to the present invention, it is of advantage that the method is able to operate the suggested system and the system comprises structural features which provide functionality being likewise to be provided by respective method steps. Consequently, the suggested method operates the system and the suggested system is able to perform the suggested method.

Further advantages are illustrated under usage of the accompanying figures, which show:
- Fig. 1:: the suggested system in normal operation mode according to an aspect of the present invention;

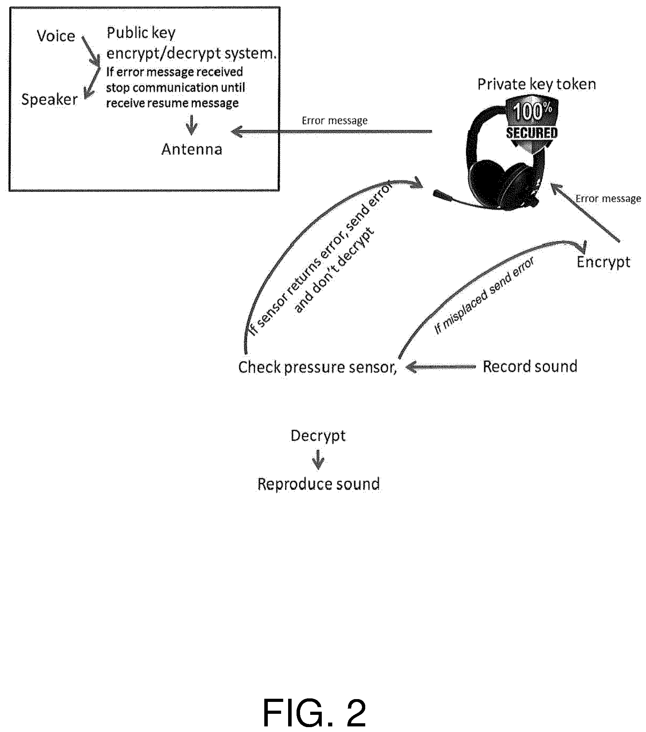

- Fig. 2:: the suggested system in case an error is detected and the pressure sensor fails according to an aspect of the present invention;
- Fig. 3:: the suggested system, wherein communication is resumed, according to a further aspect of the present invention; and
- Fig. 4:: a flowchart depicting the suggested method for securely operating a headset according to a further aspect of the present invention.

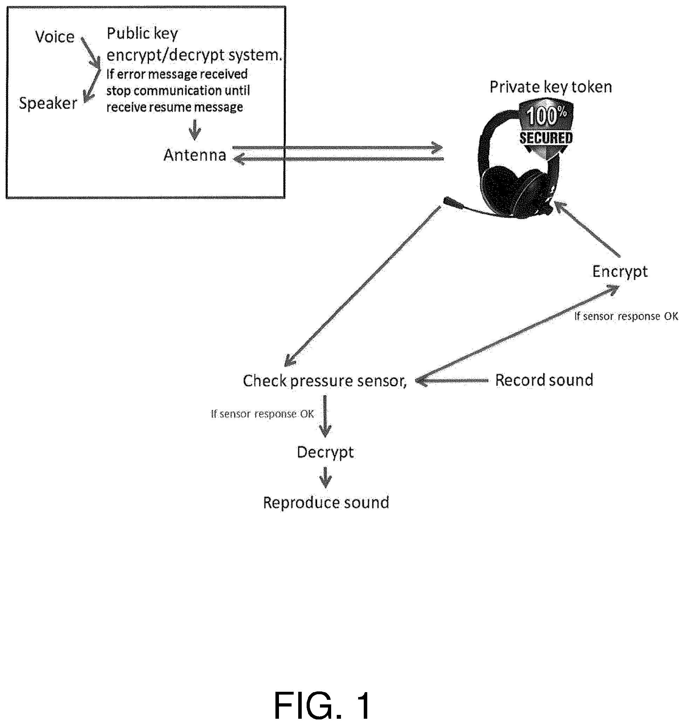

Fig. 1 shows on the left a communication partner of the headset including an antenna. On the right the headset is depicted, which communicates with the end device on the left side using encrypted data. For this reason the headset comprises a private key token and the end device comprises a public key. If an error message is received, the communication is stopped until a resume message is received.

The headset checks the pressure sensor, and if the sensor responds with an OK message, the data is decrypted and the sound is reproduced. Likewise the sound may be recorded. Further data can likewise be encrypted in case the sensor responds with an OK message.

In case the pressure sensor fails, no data is encrypted and in case the headset is misplaced, an error message is provided. Such a message may likewise be encrypted and provided to the headset. The error message is provided to the end device.

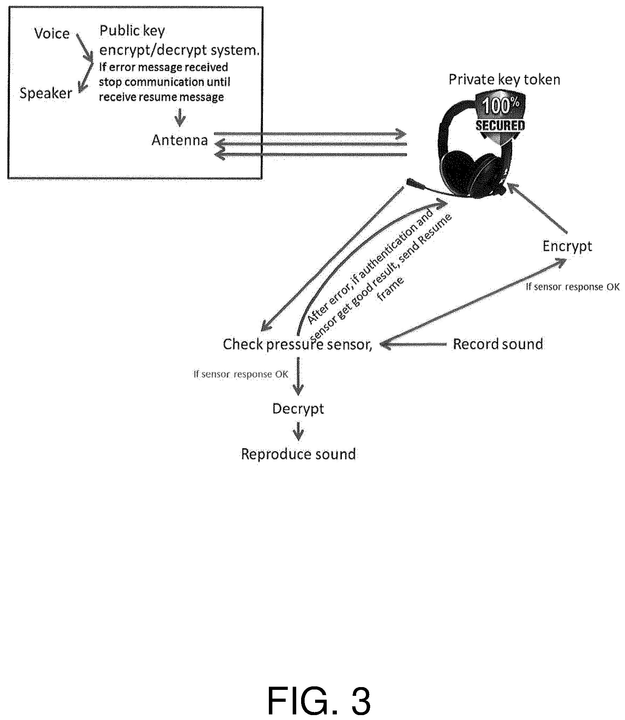

Fig. 3 shows the case where the communication is resumed. In this situation the error does no longer occur and the authentication is performed successfully. A resume message is sent to the headset and the data is decrypted and the sound is reproduced. Hence, the sound is provided to the user.

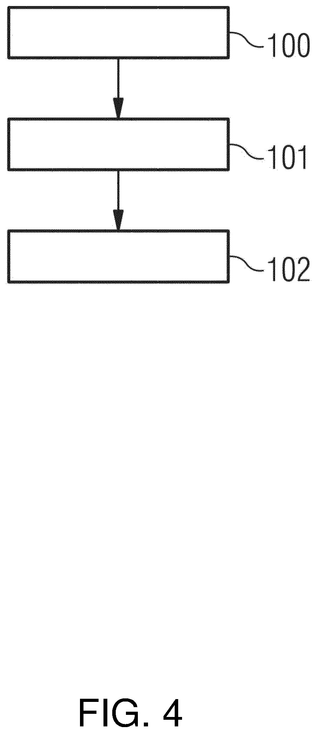

Fig. 4 shows a flowchart of the suggested method for securely operating a headset, comprising the steps of reading out 100 at least one pressure sensor arranged at the headset, determining 101 a position of the headset, the position indicating whether the headset is worn or not, and controlling 102 an operation mode of the headset as a function of the determined 101 position of the headset.

The skilled practitioner identifies that the aforementioned method steps can be performed iteratively and/or in a different order. For instance, reading out 100 at least one pressure sensor is performed using short time intervals such that the pressure sensor is checked several times. Likewise, the position of the headset is permanently determined.

The advantages of the present invention include, amongst others, a best quality of communication, especially in case of usage of only one ear piece, and physical security is added to the headset communication. Moreover, encryption is performed and a token is used. It can likewise be controlled if people involved in the communication are listening and no human error has occurred in case of loss of the headset or theft of the headset.

## Claims

1. A method for securely operating a headset, comprising the steps:
- reading out (100) at least one pressure sensor being arranged at the headset;
- determining (101) a position of the headset, the position indicating whether the headset is worn or not; and
- controlling (102) an operation mode of the headset as a function of the determined (101) position of the headset.

2. The method according to claim 1, **characterized in that** the position of the headset is determined for each side of the headset separately.

3. The method according to claim 1 or 2, **characterized in that** the operation mode is switched to mono in case only one side of the headset is worn.

4. The method according to any one of the preceding claims, **characterized in that** a communication of the headset is stopped in case it is determined that the headset is not worn.

5. The method according to any one of the preceding claims, **characterized in that** the communication of the headset is started in case it is determined that the headset is worn.

6. The method according to any one of the preceding claims, **characterized in that** controlling (102) the operation mode is performed using encrypted messages.

7. The method according to any one of the preceding claims, **characterized in that** respectively at least one pressure sensor is arranged on both sides of the headset.

8. The method according to any one of the preceding claims, **characterized in that** an acceleration sensor is read out and controlling (102) the operation mode is performed as a function of the acceleration of the headset.

9. The method according to claim 8, **characterized in that** in case an acceleration of the headset above a predefined threshold is determined the operation of the headset is stopped.

10. The method according to any one of the preceding claims, **characterized in that** in case the operation of the headset is stopped an output is recorded and provided later on.

11. The method according to any one of the preceding claims, **characterized in that** the operation of the headset is stopped in case at least one pressure sensor does not respond.

12. The method according to any one of the preceding claims, **characterized in that** the headset operates a secure element.

13. A headset for operating the method of any one of the preceding claims.

14. A system for securely operating a headset, comprising:
- an interface arranged to read out (100) at least one pressure sensor being arranged at the headset;
- a processing unit arranged to determine (101) a position of the headset, the position indicating whether the headset is worn or not; and
- an operation unit being arranged to control (102) an operation mode of the headset as a function of the determined (101) position of the headset.

15. A computer program product being arranged to perform a method in accordance with any one of the preceding claims 1 to 12, when being executed on a computer.
